# EUROPEAN PATENT APPLICATION

(11) **EP 4 105 265 A1**
(43) Date of publication of application: **21.12.2022**
(21) Application number: 21753078.1
(22) Date of filing: 29.01.2021
(51) Int. Cl.: C08J 5/00, A61L 15/24, A61L 15/26, A61L 15/42, A61L 15/48, A61L 15/64, A61L 29/04, A61L 29/06, A61L 29/14, A61L 31/04, A61L 31/06, A61L 31/14, A61L 27/16, A61L 27/18, A61L 27/50, A61L 27/58, C08J 7/00

(54) **ANTIBACTERIAL MOLDED ARTICLE AND METHOD FOR PRODUCING SAME**

(30) Priority: 12.02.2020 JP 2020021393
(71) Applicant: Kureha Corporation, Chuo-ku Tokyo 103-8552 (JP); Japan Aerospace Exploration Agency, Tokyo 182-8522 (JP)
(72) Inventor: YAMAZAKI, Masahiro, Tokyo 103-8552 (JP); ONIZAWA, Kayoko, Tokyo 103-8552 (JP); TAKAMURA, Keita, Tokyo 103-8552 (JP); MIYAZAKI, Eiji, Chofu-shi, Tokyo 182-8522 (JP); YANAGASE, Keiichi, Chofu-shi, Tokyo 182-8522 (JP); GOTO, Aki, Chofu-shi, Tokyo 182-8522 (JP)
(74) Representative: Hoefer & Partner Patentanwälte mbB
(86) International application number: PCT/JP2021/003361
(87) International publication number: WO 2021/161816

(57) **Abstract**

An object of the present invention is to provide an antibacterial molded article that can further increase antibacterial performance. The present invention for achieving the above object is related to an antibacterial molded article including a resin molded article. The resin molded article has an antibacterial area on a surface of the resin molded article, the antibacterial area having a prominent protrusion ratio of 3% or greater and 25% or less. Alternatively, the resin molded article has an antibacterial area on a surface of the resin molded article, the antibacterial area having: a maximum height of profile defined by JIS B 0601 (2013) of 100 nm or greater and less than 500 nm, and a plurality of capture protrusions having a height of not less than half the maximum height of profile (Rz), in which an average distance between the plurality of capture protrusions is 1.5 µm or greater and 7 µm or less.

## Description

### [TECHNICAL FIELD]

The present invention relates to an antibacterial molded article and a method for producing the same.

### [BACKGROUND ART]

Antibacterial articles are increasingly on the market due to increase in consumer awareness. Many antibacterial articles are those obtained by applying coating containing an antibacterial agent or obtained by embedding silver nanoparticles; however, the former may lose its antibacterial activity over time, and the latter may have too high antibacterial activity and there are restrictions on the use environment due to safety of a living body.

In recent years, patent application and thesis submission have been made on technologies that exhibit antibacterial action by physical puncture through forming a nano-order surface irregular structure on a surface. For example, Patent Documents 1 and 2 describe methods of imparting antibacterial activity to a surface of a resin composition by forming a plurality of nano-sized protrusions on the surface. According to the methods described in these documents, it is presumed that the antibacterial activity is exhibited by piercing and killing bacteria, which are brought into contact with the protrusion, by the protrusion. With this mechanism, high antibacterial effect can be expected to multidrug-resistant bacteria that are problematic recently.

Specifically, Patent Document 1 describes an antibacterial article that exhibits antibacterial performances by facilitating contact with cells through making the spacing between protrusions adequately smaller than the size of bacteria and making the shape of the protrusion a needle shape with a large aspect ratio that can pierce bacteria. Note that Patent Document 1 describes that the antibacterial activity is enhanced when the static contact angle of pure water on the surface of the antibacterial article is 30° or less because the surface is hydrophilic and the bacteria tends to be pierced by micro protrusions. According to Patent Document 1, the antibacterial article can be produced by a method, in which a liquid resin composition is cured while an original plate having a desired irregular shape is pressed toward a surface of the liquid resin composition.

Furthermore, Patent Document 2 describes a synthetic polymer film having a plurality of raised portions, a two-dimensional size of the plurality of raised portions is in a range of more than 20 nm and less than 500 nm when viewed in a normal direction of the synthetic polymer film. Note that Patent Document 2 describes that, when a contact angle of hexadecane on a surface of the synthetic polymer film is 51° or less, bactericidal activity is suitable but a contact angle of water (hydrophilicity) is not directly related to the bactericidal activity. According to Patent Document 2, the synthetic polymer film can be produced by a method, in which a UV curable resin is cured while an anodized porous alumina layer as a mold is pressed toward a surface of the UV curable resin.

Furthermore, Patent Document 3 describes an antibacterial and antifungal article having a plurality of micro protrusions arranged, in which an average distance between micro protrusions is 1 µm or less, a height of the micro protrusion is 80 nm or greater and 1000 nm or less, and the micro protrusion has a shape in which a tip vicinity part of the micro protrusion is thinner than that of a bottom part. According to Patent Document 3, because sizes of bacteria are generally 1 µm, by setting the shape and arrangement of the micro protrusions as described above, bacteria and fungi do not enter the space between the micro protrusions but are brought into contact with the tip of the micro protrusion and pierced by the tip of the micro protrusion and thus killed.

Furthermore, Patent Document 4 describes an antibacterial article having a plurality of micro protrusions arranged, in which an average distance between micro protrusions having a height of 0.125 µm or greater is greater than 0.5 µm and 5.0 µm or less. According to Patent Document 4, by setting the average of the distance between micro protrusions to greater than 0.5 µm and 5.0 µm or less, bacteria can be killed by attaching bacteria and piercing bacteria through the micro protrusions or the like, and production is easy.

### [CITATION LIST]

### [PATENT DOCUMENT]

Patent Document 1: JP 2016-093939 A
Patent Document 2: JP 2016-120478 A
Patent Document 3: JP 2016-215622 A
Patent Document 4: JP 2017-132916 A

### [SUMMARY OF INVENTION]

### [TECHNICAL PROBLEM]

As described in Patent Documents 1 to 4, compared with a resin molded article obtained by applying an antibacterial agent to a surface of a molded article, a resin molded article obtained by forming a plurality of nano-sized protrusions on a surface of a molded article of a resin composition is less likely to cause reduction of antibacterial activity due to peeling or shedding of an antibacterial agent, and thus is expected to be able to maintain the antibacterial performance for a longer period of time.

However, there is always a demand for antibacterial articles to further increase antibacterial performance.

The present invention has been made in view of the above issue, and an object of the present invention is to provide an antibacterial molded article that can further increase the antibacterial performance and a method for producing the antibacterial molded article.

### [SOLUTION TO PROBLEM]

An antibacterial molded article related to an aspect of the present invention to solve the above issue is an antibacterial molded article including a resin molded article. The resin molded article has an antibacterial area on a surface of the resin molded article, the antibacterial area having a prominent protrusion ratio of 3% or greater and 25% or less.

In addition, an antibacterial molded article related to another aspect of the present invention to solve the above issue is an antibacterial molded article including a resin molded article. The resin molded article has an antibacterial area on a surface of the resin molded article, the antibacterial area having:
a maximum height of profile defined by JIS B 0601 (2013) of 100 nm or greater and less than 500 nm, and
a plurality of capture protrusions having a height of not less than half the maximum height of profile (Rz), in which
an average distance between the plurality of capture protrusions is 1.5 µm or greater and 7 µm or less.

Furthermore, a method for producing an antibacterial molded article related to another aspect of the present invention to solve the above issue includes:
preparing a resin molded article; and
applying atmospheric-pressure plasma treatment to a surface of the resin molded article to form an antibacterial area with a prominent protrusion ratio of 3% or greater and 25% or less on the surface.

Moreover, a method for producing an antibacterial molded article related to another aspect of the present invention to solve the above issue includes:
preparing a molded article; and
applying atmospheric-pressure plasma treatment to a surface of the resin molded article to form an antibacterial area on a surface of the resin molded article, the antibacterial area having:
   a maximum height of profile defined by JIS B 0601 (2013) of 100 nm or greater and less than 500 nm, and
   a plurality of capture protrusions having a height of not less than half the maximum height of profile (Rz), in which
   an average distance between the plurality of capture protrusions is 1.5 µm or greater and 7 µm or less.

### [ADVANTAGEOUS EFFECTS OF INVENTION]

The present invention provides the antibacterial molded article that can further increase the antibacterial performance and the method for producing the antibacterial molded article.

### [BRIEF DESCRIPTION OF THE DRAWINGS]

FIG. 1A is an example of a roughness profile for LLDPE not treated with atmospheric-pressure plasma, and FIG. 1B is an example of a roughness profile for LLDPE treated with atmospheric-pressure plasma.
FIG. 2A is an example of a roughness profile for PI not treated with atmospheric-pressure plasma, and FIG. 2B is an example of a roughness profile for PI treated with atmospheric-pressure plasma.

### [DESCRIPTION OF EMBODIMENTS]

### Antibacterial molded article

### Surface profile of antibacterial area (1)

An embodiment of the present invention relates to an antibacterial molded article including a resin molded article, in which the resin molded article has an antibacterial area having a prominent protrusion ratio calculated by a method below of 3% or greater and 25% or less.

The prominent protrusion ratio can be calculated from a roughness profile of the antibacterial area obtained through measurement by a known method. First, to make all height values represented by the roughness profile positive values, offset processing is performed, in which the roughness profile is translated in the vertical direction to make the minimum height value be 0. That is, addition processing is performed, in which an identical value is uniformly added to all heights to make the minimum height value be 0 on the ordinate (hereinafter the data after the addition is also referred to as a "peak profile after addition"). The total number of protrusions is determined for this peak profile after addition. In addition, among the protrusions included in the peak profile after addition, the protrusion with the maximum height (hereinafter also referred to simply as the "maximum protrusion") is identified, and the number of protrusions with a height of not less than half the height of the maximum protrusion (hereinafter referred to simply as "prominent protrusions") is determined. Then, the ratio of the number of prominent protrusions to the total number of protrusions (number of prominent protrusions/total number of protrusions: prominent protrusion ratio) is calculated, and the prominent protrusion ratio can be calculated accordingly.

The measurement of the antibacterial area to obtain the roughness profile may be performed by either a contact or non-contact method, but from the viewpoint of facilitating the identification of the profile of surface having a certain or higher hardness, the antibacterial area is preferably measured by a contact method, which has physically high resolution, and more preferably measured by one-dimensional measurement using an atomic force microscope (AFM). The analysis length for obtaining the roughness profile can be freely determined but is preferably approximately 25600 nm (25.6 µm). The direction of one-dimensional measurement on the surface to be measured is freely selected. Sampling for the measurements is preferably performed at 6.23 nm intervals.

In addition, to reduce the influence of the error due to the area measured to obtain the roughness profile, the prominent protrusion ratio is preferably given as an average value of the prominent protrusion ratios calculated by measuring the roughness profile for a plurality of locations (e.g., 20 locations).

The prominent protrusion ratio is an index indicating the degree of a ratio of protrusions having a height of not less than half the height of the maximum protrusion (corresponding to the "maximum height of profile Rz" defined in JIS B 0601 (2013)) among the protrusions present in the antibacterial area. A moderately small prominent protrusion ratio means that protrusions outstandingly higher than many other protrusions are moderately sparsely present.

In addition, in the present embodiment, the prominent protrusion ratio in the antibacterial area is set to 3% or greater to allow a moderately large number of prominent protrusions to be present in the antibacterial area. This is considered to allow the antibacterial area to inhibit the migration of bacteria by the prominent protrusions, thereby inhibiting the metabolism of the cells and enabling reduction of the number of cells present in the antibacterial area.

In addition, in the present embodiment, the prominent protrusion ratio is set to 25% or less to allow a not too large number of prominent protrusions to be present in the antibacterial area and the prominent protrusions to be moderately sparsely arranged in the antibacterial area. This is considered to allow bacteria to enter the space between the prominent protrusions and facilitate the inhibition of the migration of bacteria by the sparsely arranged prominent protrusions, thereby inhibiting the metabolism of the cells and enabling reduction of the number of cells present in the antibacterial area.

On the other hand, for example, as described in Patent Documents 1 to 4, an attempt to form a plurality of protrusions by a method of pressing a mold on the resin composition is likely to cause all protrusions to have substantially the same height (the prominent protrusion ratio is likely to be infinitely close to 0% or 100%). Here, bacteria present on the surface of the area where the protrusions are formed are less likely to enter the space between the protrusions and can move from a tip of one protrusion to a tip of the adjacent protrusion along the tips of the protrusions while being in contact with these protrusions to straddle the tips of a plurality of protrusions. Thus, the profiles described in these documents are considered not to exhibit the effect of reducing bacterial counts by inhibiting the migration of bacteria and inhibiting the metabolism of the bacteria and thus not to have sufficiently increased antibacterial activity.

From the viewpoints described above, the prominent protrusion ratio in the antibacterial area is preferably 3% or greater and 25% or less, more preferably 4% or greater and 20% or less, and even more preferably 5% or greater and 15% or less.

In the present specification, the "protrusion" is a local maximum value in the height direction in the roughness profile. One data constituting the roughness profile is judged for whether the data is larger than two adjacent data before and after the data, and the data judged to be larger is given as the local maximum value.

In addition, the antibacterial area preferably has a height of the maximum protrusion (maximum height of profile Rz) of 100 nm or greater and less than 500 nm. With the height of the maximum protrusion of 100 nm or greater, the prominent protrusions having a sufficient height are sparsely arranged in the antibacterial area, and this is likely to provide, between the prominent protrusions, a space having a dimension (depth) that bacteria can enter. Thus, the effect of reducing bacterial counts by inhibiting the migration of bacteria and inhibiting the metabolism of the bacteria is considered to be more pronounced. In addition, with the height of the maximum protrusion of 100 nm or greater, bacteria are considered to be more likely to be pierced by the protrusions present in the antibacterial area, and this is considered to further increase the antibacterial activity of the antibacterial molded article. On the other hand, with the height of the maximum protrusion of less than 500 nm, the prominent protrusions are not too high compared with other protrusions (or the bottom surface of the antibacterial area). This is considered to be able to capture bacteria in both the side surfaces of the prominent protrusions and the tips of other protrusions (or the bottom surface of the antibacterial area), thereby increasing the area that can capture bacteria, and thus the migration of bacteria can be more effectively prevented. In addition, this makes the prominent protrusions less likely to wear during use, the antibacterial effect is easily maintained, and the antibacterial molded article looks better as well.

From the above viewpoints, the height of the maximum protrusion in the antibacterial area is more preferably 100 nm or greater and less than 500 nm, and even more preferably 100 nm or greater and 200 nm or less.

The height of the maximum protrusion can be determined by calculating the difference between the maximum value and the minimum value of the height elements (ordinate values) in the peak profile after addition created for calculation of the prominent protrusion ratio. To reduce the influence of the error due to the area measured to obtain the roughness profile, the height of the maximum protrusion is also preferably given as an average value of the heights of the maximum protrusions calculated by measuring the roughness profile for a plurality of locations (e.g., 20 locations).

In addition, the antibacterial area preferably has a total number of protrusions of 20 or more and 50 or less per 10 µm cross-sectional length. With the total number of protrusions of 20 or more, the prominent protrusions are allowed to be moderately densely present in the antibacterial area, and this is considered to facilitate the capture of bacteria between the prominent protrusions and to be able to facilitate the inhibition of the migration of bacteria. In addition, with the total number of protrusions of 50 or less, the prominent protrusions are allowed to be moderately sparsely present in the antibacterial area, and this is considered to moderately lengthen the distance between adjacent prominent protrusions and to be able to facilitate the inhibition of the migration of bacteria along the tips of the prominent protrusions.

From the above viewpoints, the total number of protrusions per 10 µm cross-sectional length in the antibacterial area is more preferably 20 or more and 100 or less, and even more preferably 20 or more and 50 or less. In addition, the number of prominent protrusions per 10 µm cross-sectional length is preferably 1 or more and 7 or less, and more preferably 4 or more and 7 or less.

The total number of protrusions per 10 µm cross-sectional length can be determined as a value obtained by converting the total number of protrusions determined for calculation of the prominent protrusion ratio into the number per 10 µm unit length. To reduce the influence of the error due to the area measured to obtain the roughness profile, the total number of protrusions per 10 µm cross-sectional length is also preferably given as an average value of the heights of the maximum protrusions calculated by measuring the roughness profile for a plurality of locations (e.g., 20 locations).

In addition, the plurality of prominent protrusions preferably has a standard deviation of height of 10 nm or greater and 60 nm or less. With the standard deviation of 10 nm or greater, a height difference is created between adjacent protrusions, and a bacterium colliding with one of the protrusions is considered to be likely to fall into the gap between the protrusions. Furthermore, with the standard deviation of 60 nm or less, the height differences of the prominent protrusions are created too much, and this is considered to be able to inhibit the migration of bacteria over the prominent protrusions using prominent protrusions on the side with a lower height difference as a foothold. From the above viewpoints, the standard deviation is more preferably 20 nm or greater and 50 nm or less.

The antibacterial area preferably has an arithmetic mean roughness Ra of 4 nm or greater and 13 nm or less. With the Ra of 4 nm or greater, a surface irregular shape with a sufficient height (depth) is formed in the antibacterial area, and this is considered to facilitate the capture of bacteria in the recessed part of the surface irregular shape and to be able to facilitate the inhibition of the migration of bacteria. On the other hand, with the Ra of 13 nm or less, the height of the surface irregularities formed in the antibacterial area is not too high, and thus this is considered to allow bacteria to be captured in both the protruding part and the recessed part (in both the oblique side and the bottom part included in the surface irregular shape), to be able to increase the area that can capture bacteria, and thus to be able to more effectively prevent the migration of bacteria. In addition, this makes the protruding part less likely to wear during use, the antibacterial effect is easily maintained, and the antibacterial molded article looks better as well. The appearance of the molded article is also good. From the above viewpoints, the Ra is more preferably 5 nm or greater and 12 nm or less, and even more preferably 6 nm or greater and 11 nm or less.

In addition, the antibacterial area preferably has a ten-point mean roughness Rzjis of 100 nm or greater and 150 nm or less. With the Rzjis of 100 nm or greater, a surface irregular shape with a sufficient height (depth) is formed in the antibacterial area, and thus this is considered to facilitate the capture of bacteria in the recessed part of the surface irregular shape and facilitate the inhibition of the migration of bacteria. On the other hand, with the Rzjis of 150 nm or less, the height of the surface irregularities formed in the antibacterial area is not too high, thus this is considered to allow bacteria to be captured in both the protruding part and the recessed part (in both the oblique side and the bottom part included in the surface irregular shape), to be able to increase the area that can capture bacteria, and thus to be able to more effectively prevent the migration of bacteria. Furthermore, this makes the protruding part less likely to wear during use, the antibacterial effect is easily maintained, and the antibacterial molded article looks better as well. From the above viewpoints, the Rzjis is more preferably 100 nm or greater and 150 nm or less, and even more preferably 110 nm or greater and 140 nm or less.

In addition, the antibacterial area preferably has a load length ratio (Rmr (c)) of 1% or greater and less than 20% when the cutting level is half the maximum height of profile (Rz). With the Rmr (c) of 1% or greater, the prominent protrusions are allowed to be moderately densely present in the antibacterial area, and this is considered to facilitate the capture of bacteria between the prominent protrusions and to be able to facilitate the inhibition of the migration of bacteria. Furthermore, with the Rmr (c) of less than 20%, the prominent protrusions are allowed to be moderately sparsely present in the antibacterial area, and this is considered to moderately lengthen the distance between adjacent prominent protrusions and to be able to facilitate the inhibition of the migration of bacteria along the tips of the prominent protrusions. From the above viewpoints, the Rmr (c) is more preferably 1% or greater and 16% or less, and particularly preferably 1% or greater and 13% or less.

In addition, the antibacterial area preferably has a root mean square height Rq of 6 nm or greater and 25 nm or less. With the Rq of 6 nm or greater, the distribution width of the height of the protrusions further increases, and a sufficient number of high protrusions are arranged in the antibacterial area. This is considered to enable the high protrusions to exhibit the effect of inhibiting the migration of bacteria more easily. On the other hand, with the Rq of 25 nm or less, the distribution width of the height of the protrusions is not too large, and thus the prominent protrusions are not too high compared with other protrusions (or the bottom surface of the antibacterial area). This is considered to allow bacteria to be captured in both the side surfaces of the prominent protrusions and the tips of other protrusions (or the bottom surface of the antibacterial area), to be able to increase the area that can capture bacteria, and thus to be able to more effectively prevent the migration of bacteria. Furthermore, this makes the prominent protrusions less likely to wear during use, the antibacterial effect is easily maintained, and the antibacterial molded article looks better as well. From the above viewpoints, the Rq is more preferably 8 nm or greater and 20 nm or less, and even more preferably 10 nm or greater and 16 nm or less.

### Surface profile of antibacterial area (2)

Another embodiment of the present invention is an antibacterial molded article including a resin molded article, the antibacterial molded article having an antibacterial area having a maximum height of profile (Rz) of 100 nm or greater and less than 500 nm and having a plurality of protrusions (hereinafter also referred to simply as "capture protrusions") having a height of not less than half the maximum height of profile (Rz), in which an average value of a distance between adjacent capture protrusions among the plurality of capture protrusions is 1.5 µm or greater and 7 µm or less. The distance between the protrusions refers to the distance between the vertices of the protrusions.

The antibacterial area has a maximum height of profile of 100 nm or greater, and the average distance between the capture protrusions is 1.5 µm or greater, preferably 2 µm or greater, and 7 µm or less. This is considered to allow bacteria to easily enter the space between the plurality of capture protrusions and to enable the capture protrusions to prevent the migration of bacteria, and thus to have higher antibacterial effect. From the above viewpoints, the average distance between the capture protrusions is preferably 2 µm or greater and 7 µm or less. The antibacterial area having a maximum height of profile of less than 500 nm makes the capture protrusions less likely to wear during use, easily maintains the antibacterial effect, and makes the antibacterial molded article look better as well. The antibacterial area having a maximum height of profile of 200 nm or less makes the resin molded article surface look almost smooth when viewed with naked eyes and does not spoil the fine appearance, and thus this is preferred.

In addition, the plurality of capture protrusions preferably has 0.5 or more sets of the capture protrusions in which a distance between adjacent capture protrusions is 1.5 µm or greater and 7 µm or less (preferably 2 µm or greater and 7 µm or less) per 10 µm cross-sectional length. With the number of the sets of the capture protrusions being 0.5 or more, more sets of the capture protrusions that can capture bacteria are arranged in the antibacterial area. Thus, this is considered to have higher antibacterial effect. From the above viewpoint, the number of the sets of the capture protrusions is more preferably 1.0 or more and even more preferably 1.5 or more per 10 µm cross-sectional length. The maximum value of the number of the sets of the capture protrusions per 10 µm cross-sectional length is not particularly limited but can be 9 or less.

In addition, the maximum value of the heights of the protrusions (protrusions that have a height less than half the height of the maximum height of profile (Rz) and are not the capture protrusions) present between adjacent capture protrusions in the plurality of capture protrusions is preferably 5% or greater and 60% or less of the average value of the heights of the two adjacent capture protrusions. With the maximum value of 5% or greater, bacteria entering the gaps are considered to be restrained from below, and this is considered to facilitate the inhibition of the migration. Furthermore, with the maximum value of 60% or less, bacteria are considered to easily enter the gaps between the capture protrusions. From the above viewpoints, the maximum value is more preferably 5% or greater and 60% or less, and even more preferably 10% or greater and 50% or less.

In addition, the plurality of capture protrusions preferably has a standard deviation of height of 10 nm or greater and 60 nm or less. With the standard deviation of 10 nm or greater, a height difference is created between adjacent protrusions, and a bacterium colliding with one of the protrusions is considered to be likely to fall into the gap between the protrusions. Furthermore, with the standard deviation of 60 nm or less, the height differences of the prominent protrusions are created too much, and this is considered to be able to inhibit the migration of bacteria over the prominent protrusions using prominent protrusions on the side with a lower height difference as a foothold. From the above viewpoints, the standard deviation is more preferably 20 nm or greater and 50 nm or less.

### Measurement of surface profile of antibacterial area

In the present specification, the arithmetic mean roughness Ra, the ten-point mean roughness Rzjis, the load length ratio tp, the root mean square height Rq, and the height of each protrusion are parameters defined in accordance with JIS B 0601 (2013). In addition, the average distance between the capture protrusions is a parameter determined from the average value of the load length at a cutting level of half the maximum height of profile (Rz). The roughness profile for calculating these parameters is the roughness profile created for calculation of the prominent protrusion ratio. To reduce the influence of the error due to the area measured to obtain the roughness profile, the arithmetic mean roughness Ra, the ten-point mean roughness Rzjis, the load length ratio Rmr (c), and the root mean square height Rq are also preferably given as an average value of the heights of the maximum protrusions calculated by measuring the roughness profile for a plurality of locations (e.g., 20 locations).

### Antibacterial activity of antibacterial area

The antibacterial area having the surface profile described above has antibacterial activity against various bacteria. For example, the antibacterial area has antibacterial activity against any of *Escherichia coli, Staphylococcus aureus, Lactobacillus,* and *Pseudomonas aeruginosa,* preferably has antibacterial activity against at least any of *Escherichia coli, Staphylococcus aureus,* and *Pseudomonas aeruginosa,* and has antibacterial activity against at least *Escherichia coli* and *Staphylococcus aureus.*

Note that, in the present specification, antibacterial action refers to both killing bacteria present in a medium and suppressing proliferation of bacteria by inactivating the bacteria. In addition, in the present specification, having antibacterial activity means that Δlog bacterial count determined by inoculating bacteria and measuring a viable bacteria count by a method similar to the method described in JIS Z 2801 (2012) immediately after the inoculation and 24 hours after the inoculation (a logarithmic value of a viable bacteria count after 24 hours in an unprocessed sample - a logarithmic value of a viable bacteria count after 24 hours in an evaluation sample in which the surface is the antibacterial area) is 2.0 or greater. Δlog is more preferably 3.0 or greater and even more preferably 4.0 or greater.

### Shape of resin molded article

The resin molded article is a molded article formed by molding a resin composition into a predetermined shape or indeterminate shape to impart a shape. The shape of the resin molded article is not particularly limited and can be freely selected according to the application of the antibacterial molded article. For example, the molded article can have a predetermined shape, such as a film shape, a sheet shape, a tube shape, a ring shape, a bulk shape (e.g., such as a cube, a cuboid, a column, and a sphere), a plate shape, a bag shape, a fibrous shape, a net shape, and a three-dimensional structure formed by processing these, or can have an indeterminate shape.

For example, when the shape is a film shape or sheet shape, the thickness of the resin molded article is preferably 1 µm or greater and 1000 µm or less, more preferably 3 µm or greater and 800 µm or less, even more preferably 5 µm or greater and 500 µm or less, and particularly preferably 10 µm or greater and 300 µm or less.

The present invention has advantages including: enabling mass production by injection molding or the like due to formation of the antibacterial area on the surface of the resin molded article; having a high degree of freedom in design and enabling processing into various shapes; having flexibility and enabling adhesion to various shapes; and enabling weight reduction of the antibacterial molded article compared with metal.

The antibacterial area is at least a part of the surface of the resin molded article, but the entire surface of the resin molded article may be the antibacterial area. In addition, in the resin molded article having a plurality of surfaces, such as a polyhedron, the antibacterial area may be formed on all of the plurality of surfaces or may be formed on at least one surface (the whole of the surface or a part of the area included in the surface). Alternatively, in the resin molded article having at least one surface, such as a sphere, the antibacterial area may be formed on the whole of the one surface or a part of the area included in the one surface.

In the resin molded article, the antibacterial area is formed on a surface of the antibacterial molded article with which bacteria can come into contact. The surface with which bacteria can come into contact means a surface of an antibacterial molded article, the surface having a possibility of being in contact with bacteria from the outside during use, standby, and storage of the antibacterial molded article. For example, the antibacterial area may be formed on a portion with which a user comes into contact during use of the antibacterial molded article. In addition, when the molded article has a portion that can be expected to be more likely to contact with bacteria, such as a portion exposed to a water flow or an air flow during use, or a portion that can be expected to contact with food, a pharmaceutical product, a living body, or the like, the antibacterial area may be formed at least on the corresponding part. When the resin molded article has a shape, such as a bag shape or a tube shape, the antibacterial area may be formed on the inner surface of the resin molded article. In addition, the antibacterial area may be unexposed to outside when not used, for example, by sealing treatment or with a lid.

### Material of resin molded article

The resin molded article is a molded article formed by molding a composition containing a resin (resin composition). The resin composition contains 30 mass% or greater of the resin with respect to the total mass thereof. The resin composition may optionally contain an additive to adjust the characteristics of the antibacterial molded article based on, for example, the application of the antibacterial molded article. Examples of the additive include known fillers (bulking agents), lubricants, plasticizers, UV stabilizers, coloration inhibitors, matting agents, deodorizing agents, flame retarders, weathering agents, antistatic materials, antioxidants, and colorants (dyes, pigments). These additives are used by selecting an optimal combination in a range that does not inhibit the effects of the present invention. Furthermore, depending on the application or request, organic substances (optionally another polymer) and inorganic substances such as metal nanoparticles may be used as other additives.

The type of the resin can be optionally selected based on the application of the antibacterial molded article. The resin may be a thermoplastic resin or a curable resin. The curable resin may be a thermosetting resin, a photocurable resin, or an electron beam curable resin. Furthermore, the resin may be a crystalline resin or an amorphous resin. Furthermore, the resin may be a rubber such as a synthetic rubber or a natural rubber. According to the knowledge of the present inventors, a resin molded article containing a crystalline resin is easy to process, and the antibacterial activity is easily imparted by, for example, moderate conditions of atmospheric-pressure plasma treatment described later, as compared with those for a resin molded article containing an amorphous resin. However, antibacterial activity can be sufficiently imparted also to a resin molded article containing a resin other than a crystalline resin by appropriately adjusting atmospheric-pressure plasma treatment conditions or the like.

Examples of the resin include polyethylene (including linear low density polyethylene (LLDPE), low density polyethylene (LDPE), and high density polyethylene (HDPE)), polypropylene, other polyolefin resins, poly(tetrafluoroethylene) (PTFE), perfluoroalkoxy alkane (PFA), perfluoroethylene propene copolymers (FEP), poly(vinylidene fluoride) (PVDF), poly(vinylidene chloride) (PVDC), non-aromatic polyamide (including nylon 6, nylon 66, and nylon 12), non-aromatic polyimide, polyacetal (POM), polyurethane, ethylene-vinyl alcohol copolymers (EVOHs), poly(vinyl chloride) (PVC), acrylic polymers, ethylene-vinyl acetate copolymers (EVAs), poly(lactic acid) (PLA), polycaprolactone (PCL), and poly(glycolic acid) (PGA), polystyrene (PS), polyester (including poly(ethylene terephthalate) (PET), poly(butylene terephthalate) (PBT), and poly(butylene naphthalate) (PBN)), poly(phenylene sulfide) (PPS), poly(ether ether ketone) (PEEK), semi-aromatic polyamide (including nylon 6T and nylon 9T), wholly aromatic polyamide, semi-aromatic polyimide, wholly aromatic polyimide, polystyrene (PS), acrylonitrile-styrene copolymers (AS), acrylonitrile-butadiene-styrene copolymers (ABS), polycarbonate (PC), polyarylate (PAR), poly(phenylene ether) (PPE), polyphenolic resins, and epoxy resins.

Examples of the synthetic rubber include isoprene rubber (IR), butadiene rubber (BR), styrene-butadiene rubber (SBR), nitrile rubber (NBR), ethylene-propylene rubber (EPM), and other thermoplastic elastomers (including SEBS, SBS, and SEPS).

Among these, the resin is preferably a polyolefin resin, poly(tetrafluoroethylene) (PTFE), perfluoroalkoxy alkane (PFA), a perfluoroethylene propene copolymer (FEP), poly(vinylidene fluoride) (PVDF), poly(vinylidene chloride) (PVDC), polyamide (PA), polyimide (PI), poly(phenylene sulfide) (PPS), poly(ether ether ketone) (PEEK), polyacetal (POM), an acrylonitrile-butadiene-styrene copolymer (ABS), polycarbonate (PC), poly(ethylene terephthalate) (PET), polyurethane, an ethylene-vinyl alcohol copolymer (EVOH), poly(vinyl chloride) (PVC), an acrylic polymer, an ethylene-vinyl acetate copolymer (EVA), poly(lactic acid) (PLA), polycaprolactone (PCL), or poly(glycolic acid) (PGA), more preferably polyethylene, polypropylene, poly(vinylidene chloride), polyimide, poly(ethylene terephthalate), or poly(phenylene sulfide), even more preferably polyethylene, polypropylene, poly(vinylidene chloride), polyimide, or poly(phenylene sulfide), still more preferably polyethylene, polypropylene, polyimide, or poly(vinylidene chloride), and particularly preferably polyimide or poly(vinylidene chloride).

### Form of antibacterial molded article

The antibacterial molded article includes the resin molded article having the antibacterial area on the surface. The antibacterial molded article may be entirely composed of the resin molded article, may be a complex of the resin molded article and another resin molded article having no antibacterial area on the surface, or may be a complex of the resin molded article and a metal or ceramic. The "antibacterial molded article" is a molded article having antibacterial activity imparted by the antibacterial area. The antibacterial molded article itself may be used for antibacterial application or may be a molded article having antibacterial action imparted in addition to an original application of the antibacterial molded article.

### Applications of antibacterial molded article

The antibacterial molded article can be used for a wide variety of applications including a packaging, equipment for a building, a household appliance, an electronic device or peripheral device thereof, a component for an automobile, various coatings, medical equipment, an article for agriculture, stationery, and body outfit. Note that an aspect of use of the antibacterial molded article include articles, in which the antibacterial molded article is used for these applications, and incorporating the antibacterial molded article as a part of these articles.

For example, the antibacterial molded article, when used for the packaging application, has the antibacterial area formed on an outer surface or inner surface of a film or sheet to be used for packaging another article, thereby preventing bacteria from entering the packaged article and thus enhancing storability of the packaged article.

Examples of the equipment for a building include toilets and sheets for toilet seats, washstands, pipes for plumbing, foot wiping mats, interior finishing materials, and articles to which human hands ordinarily touch, such as doorknobs for doors, handrails, and switches.

Examples of the household appliance include rice cookers, microwave ovens, refrigerators, irons, hairdryers, air conditioners, and air purifiers.

Examples of the electronic device or peripheral device thereof include laptop personal computers, smartphones, tablets, digital cameras, electronic devices for medical treatment, POS systems, printers, televisions, mouses, and keyboards.

Examples of the component for an automobile include steering wheels, seats, shift levers, and various pipes.

Examples of the packaging include packaging for pharmaceuticals and foods.

Examples of the coating include coatings for wall surfaces, floor surfaces, and ceilings of factories, operating rooms, storages, and container for transport.

Examples of the medical equipment include forceps, syringes, stents, artificial blood vessels, catheters, wound dressings, scaffoldings for regenerative therapy, antiadhesive materials, or pacemakers.

Examples of the article for agriculture include spread films for greenhouses.

Examples of the body outfit include clothing including outerwear and underwear, headgear, shoes, gloves, diapers, and sanitary napkins and storage bags thereof.

Furthermore, the antibacterial molded article can be used to kill bacteria contained in equipment for buildings, body outfits, tableware, beverages, and foods by bringing the antibacterial molded article into contact with these.

### Method for producing antibacterial molded article

The antibacterial molded article can be produced by a method of forming micro protrusions on the surface of the resin molded article in such a manner that the prominent protrusion ratio is within the range described above. Alternatively, the antibacterial molded article can be produced by a method of molding the resin molded article in such a manner that the prominent protrusion ratio on the surface of the resin molded article after molding is within the range described above.

The method of the surface treatment is not particularly limited but is preferably atmospheric-pressure plasma, low pressure plasma, a blasting method, a discharging process, atomic oxygen irradiation, or atmospheric-pressure plasma treatment, and particularly preferably low pressure plasma or atmospheric-pressure plasma treatment.

Specifically, first, a molded article containing the resin composition, in which the antibacterial area is to be formed on the surface, is prepared. The material and shape of the resin molded article are as described above for the resin molded article.

The atmospheric-pressure plasma treatment may be a direct atmospheric-pressure plasma treatment in which the surface of the molded article including the resin composition arranged in the discharge space (between electrodes) is directly plasma-treated or may be a remote (spraying) atmospheric-pressure plasma treatment in which plasma generated in the discharge space is sprayed by an air flow onto the surface of the molded article containing the resin composition. Of these, the direct treatment is preferred from the viewpoint of creating the desired micro protrusions homogeneously in a wide range.

The pressure of the discharge space is preferably 2701 Pa or higher and more preferably atmospheric-pressure.

The discharge space is electrodes arranged facing each other, and plasma is generated by applying a voltage between the electrodes to discharge. The surface of the molded article including the resin composition is exposed to the generated plasma, and thus the antibacterial area described above can be formed.

The voltage applied at this time is typically a high voltage to be applied from an alternator, and for example, the frequency is 50 Hz or higher, and the voltage is approximately from 0.1 to 10 kW.

The electrodes are metal bodies or metal bodies whose surfaces are covered with a dielectric and may have any shape, such as a plate shape, a rod shape, a wire shape, and a roll shape.

The distance between the electrodes facing each other is approximately from 0.1 to 20 mm.

The air (discharge gas) between the electrodes facing each other is preferably a gas mainly composed of inert gas, such as the atmosphere, nitrogen gas, helium, neon, krypton, xenon, and radon. In addition, from the viewpoint of increasing the efficiency of the atmospheric-pressure plasma treatment, the gas preferably contains approximately from 0.1 to 50% of oxygen.

The duration of the atmospheric-pressure plasma treatment is not particularly limited and can be, for example, 1 minute to 60 minutes.

These various conditions are appropriately set according to the type of the resin composition used as a material of the resin molded article or the like in such a manner that the prominent protrusion ratio is within the range described above.

In addition, a resin molded article having micro protrusions formed on the surface in such a manner that the prominent protrusion ratio is within the range described above may be molded using a mold for injection molding, the mold having an adjusted surface shape, or the like. Alternatively, micro protrusions may be formed on the surface of the resin molded article in such a manner that the prominent protrusion ratio is within the range described above by pressing a mold on the surface of the resin molded article after molding.

### Antibacterial method

The antibacterial molded article can be used for various antibacterial method.

Specifically, by bringing the antibacterial molded article into contact with a liquid, solid, or gas containing bacteria, the bacteria contained in the liquid, on the solid surface, or in the gas which has been in contact can be killed, and the liquid, solid, or gas can be sterilized.

The contact may be performed by a known method. For example, the contact with a liquid can be performed by methods such as soaking the antibacterial molded article into the liquid that is flowing or static, spraying or atomizing the liquid to the antibacterial molded article, or applying or dropping the liquid to the antibacterial molded article. Furthermore, the contact with a solid can be performed by methods such as allowing the antibacterial molded article that is static or slides to be in contact with or pressed toward the surface of the solid that is static or slides. Furthermore, the contact with a gas can be performed by methods such as allowing the antibacterial molded article to stand still in an atmosphere containing the gas that is flowing or static, and spraying the air to the antibacterial molded article.

### [EXAMPLES]

Hereinafter, specific examples of the present invention will be described together with comparative examples, but the present invention is not limited thereto.

### Experiment 1

### 1-1. Production of antibacterial molded article

### 1-1-1. Preparation of molded articles of resin compositions

The following substrate films were prepared as molded articles of the resin compositions. The size of the substrate films was a 280 mm × 180 mm square shape.
Linear low density polyethylene (LLDPE): TUS-TCS #60, available from Mitsui Chemicals Tohcello, Inc., thickness 53 µm
Poly(vinylidene chloride) (PVDC): available from Kureha Corporation, thickness 45 µm
Poly(vinylidene fluoride) (PVDF): available from Kureha Corporation, thickness 16 µm
Polyimide (PI): Kapton 200H, available from Du Pont-Toray Co., Ltd., thickness 53 µm

### 1-1-2. Surface treatment

The surface of the substrate film was treated by atmospheric-pressure plasma under different conditions.

### 1-2. Evaluation

### 1-2-1. Measurement with atomic force microscope (AFM)

The surface profile of each substrate film before and after the atmospheric-pressure plasma treatment was measured with an atomic force microscope (AFM) under the following conditions.

### Measurement instrument

Atomic force microscope, SPI3800N/SPA300HV, available from Seiko Instruments Inc.
Measurement conditions
Scanning range: 25.6 µm × 25.6 µm
Measurement mode: contact mode
Sampling resolution: 6.23 nm
Atmosphere: atmospheric environment
Temperature: room temperature
Cantilever:
   Spring constant: 0.1 N/m
   Torsional spring constant: 227.2 N/m
   Resonance frequency: 19 kHz
Scanner sensitivity:
   X direction: 270 nm/V
   Y direction: 270 nm/V
   Z direction: 22 nm/V
   Bias voltage: 0 V

From the surface profile obtained by the above measurement, a roughness profile was derived under the following conditions.
Software
Nano Navi, available from Seiko Instruments Inc.
Deriving conditions
Analysis type: optional cross-sectional profile
Analysis length (one dimension): 25600 nm (25.6 µm)
Cut-off value: 3163 nm (set value: 3000 nm)

From the roughness profile thus obtained, the maximum height value and the total number of protrusions were determined by the matlab findpeaks number.

In addition, to height elements (ordinate values) of the data of the roughness profile thus obtained, the minimum value of the roughness profile was added, and values of all the height elements were made positive values (a peak profile after addition). Then, the number of peaks (total number of protrusions) present in the peak profile after addition and the number of peaks (number of prominent protrusions) having a height of not less than half the maximum value of the peak curve after addition were determined by the matlab findpeaks number. A ratio of the number of prominent protrusions to the total number of protrusions (number of prominent protrusions/total number of protrusions: prominent protrusion ratio) was then calculated.

For randomly selected 20 cross sections, the surface profile was observed, the roughness profile was derived, and average values of the resulting maximum height, total number of protrusions, and prominent protrusion ratio were determined.

For randomly selected 20 cross sections, the surface shape was observed, the roughness profile was derived, and average values of the arithmetic mean roughness Ra, ten-point mean roughness Rzjis, load length ratio tp, and root mean square height Rq were determined.

### 1-2-2. Antibacterial activity

The antibacterial activity of each sample above against *Staphylococcus aureus* was evaluated. Specifically, in the same manner as in the method described in JIS Z 2801 (2012), the following *Staphylococcus aureus* was inoculated and cultured for 24 hours under the following conditions. The inoculation was performed to adhere the *Staphylococcus aureus* to the antibacterial area of each evaluation sample.
Bacterial Strain
*Staphylococcus aureus*: *Staphylococcus aureus,* NBRC No. 12732
Culture conditions
Temperature: 35°C ± 1°C
Measurement of Viable Bacteria Count
Used medium: standard agar medium

A viable bacteria count was measured by the method described in JIS Z 2801 (2012) immediately after the inoculation and 24 hours after the inoculation, and the Δlog bacterial count (logarithmic value of viable bacteria count after 24 hours for comparative (unprocessed) sample - logarithmic value of viable bacteria count after 24 hours for each evaluation sample) was determined. The sample with a Δlog of 2.0 or greater for *Escherichia coli* or *Staphylococcus aureus* was determined to have antibacterial activity.

Table 1 shows the surface profile of each substrate film (average values of the maximum height of profile Rz, the total number of protrusions converted per 10 µm, the number of prominent protrusions converted per 10 µm, and the prominent protrusion ratio) and Δlog.

**[Table 1-1]**

| Atmospheric-pressure plasma treatment | Substrate film | Surface profile | | |
|---|---|---|---|---|
| | | Maximum height of profile (Rz) (nm) | Total number of protrusions/ 10 µm | Number of prominent protrusions/ 10 µm |
| Not applied | LLDPE | 32.6 | 27.7 | 17.0 |
| | PVDC | 72.8 | 24.4 | 10.7 |
| | PVDF | 28.1 | 28.9 | 16.9 |
| | PI | 6.0 | 32.1 | 22.5 |
| Applied | LLDPE | 99.7 | 22.1 | 9.6 |
| | PVDC | 119.8 | 27.9 | 1.6 |
| | PVDF | 16.2 | 28.5 | 17.2 |
| | PI | 131.9 | 31.4 | 4.3 |

**[Table 1-2]**

| Atmospheric-pressure plasma treatment | Substrate film | Surface profile | | Antibacterial activity |
|---|---|---|---|---|
| | | Prominent protrusion ratio (%) | Prominent protrusion height standard deviation (nm) | ΔLog |
| Not applied | LLDPE | 61.3 | 3.82 | 0.0 |
| | PVDC | 43.9 | 9.48 | -0.1 |
| | PVDF | 58.3 | 3.35 | 0.0 |
| | PI | 70.0 | 0.66 | 0.0 |
| Applied | LLDPE | 43.6 | 12.72 | 0.0 |
| | PVDC | 5.7 | 24.22 | 3.1 |
| | PVDF | 60.5 | 1.88 | 0.0 |
| | PI | 13.6 | 24.04 | 3.5 |

For reference, Table 2 shows other surface profiles of each substrate film (average values of the arithmetic mean roughness Ra, ten-point mean roughness Rzjis, load length ratio Rmr (c), and root mean square height Rq).

**[Table 2]**

| Atmospheric-pressure plasma treatment | Substrate film | Surface profile | | | |
|---|---|---|---|---|---|
| | | Arithmetic mean roughness Ra (nm) | Ten-point mean roughness Rzjis (nm) | Load length ratio Rmr (c) (%) | Root mean square height Rq (nm) |
| Not applied | LLDPE | 3.278 | 32.604 | 39.0 | 4.432 |
| | PVDC | 8.534 | 72.810 | 28.1 | 11.074 |
| | PVDF | 3.228 | 28.078 | 35.3 | 4.150 |
| | PI | 0.618 | 5.946 | 33.9 | 0.801 |
| Applied | LLDPE | 10.632 | 99.692 | 21.5 | 14.081 |
| | PVDC | 7.476 | 119.782 | 3.6 | 12.902 |
| | PVDF | 2.016 | 16.164 | 39.9 | 2.585 |
| | PI | 10.365 | 131.919 | 3.6 | 15.661 |

Table 3 shows the surface profile of each substrate film (distance between the capture protrusions and standard deviation of the capture protrusion heights) and Δlog.

**[Table 3]**

| Atmospheric-pressure plasma treatment | Substrate film | Surface profile | | Antibacterial activity |
|---|---|---|---|---|
| | | Distance between capture protrusions (µm) | Capture protrusion height standard deviation (nm) | ΔLog |
| Not applied | LLDPE | 0.59 | 3.82 | 0.0 |
| | PVDC | 0.93 | 9.48 | -0.1 |
| | PVDF | 0.59 | 3.35 | 0.0 |
| | PI | 0.17 | 0.66 | 0.0 |
| Applied | LLDPE | 1.04 | 12.72 | 0.0 |
| | PVDC | 6.32 | 24.22 | 3.1 |
| | PVDF | 0.58 | 1.88 | 0.0 |
| | PI | 2.34 | 24.04 | 3.5 |

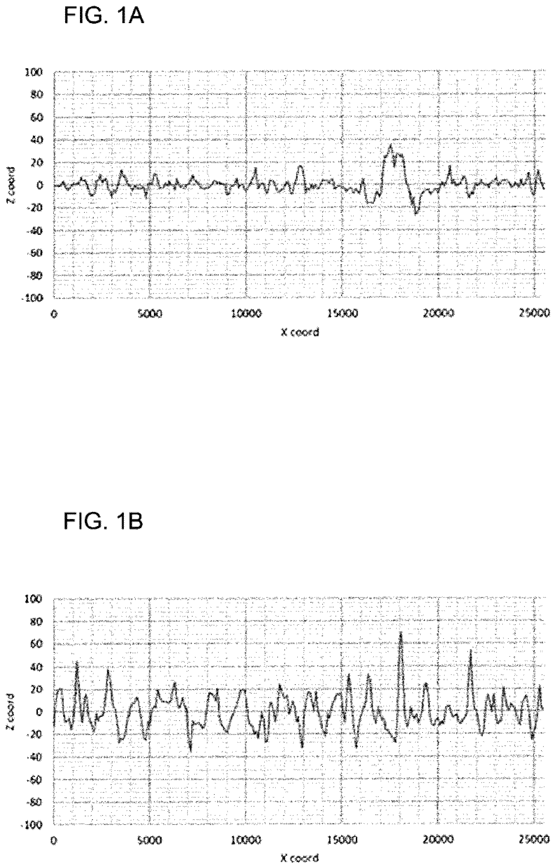

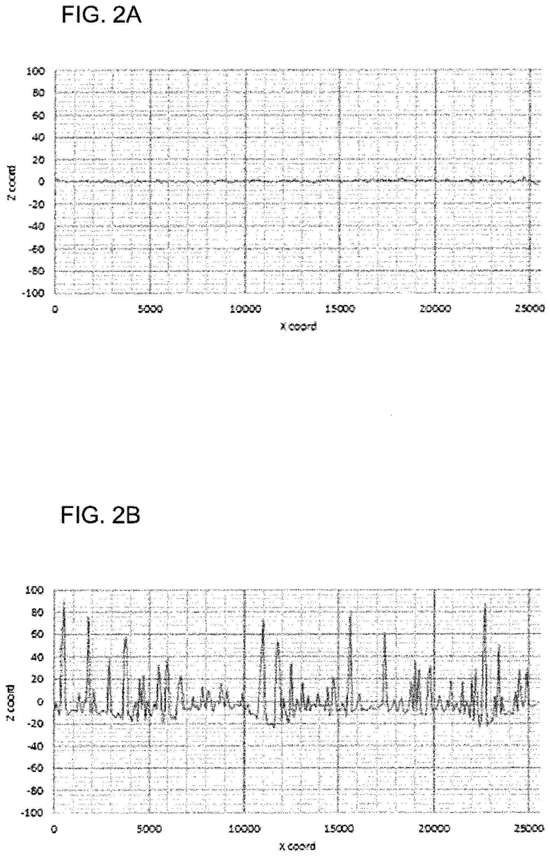

FIG. 1A is an example of a roughness profile for LLDPE not treated with the atmospheric-pressure plasma, and FIG. 1B is an example of a roughness profile for LLDPE treated with the atmospheric-pressure plasma. In addition, FIG. 2A is an example of a roughness profile for PI not treated with the atmospheric-pressure plasma, and FIG. 2B is an example of a roughness profile for PI treated with the atmospheric-pressure plasma.

As is clear from Table 1, the sample with a prominent protrusion ratio of 3% or greater and 25% or less had better antibacterial performance than the samples with a prominent protrusion ratio outside the above range.

In addition, a comparison of FIGS. 1A, 1B, and 2A with FIG. 2B showing the roughness profile of the sample having excellent antibacterial performance reveals that a moderately sparse presence of the protrusions (prominent protrusions) with a height greater than that of other protrusions increases the antibacterial performance.

The present application claims priority to Japanese Patent Application No. 2020-021393 filed on February 12, 2020, and the contents of the claims, the specification, and the drawings of the application are incorporated into the present application.

### [INDUSTRIAL APPLICABILITY]

The antibacterial molded article according to an embodiment of the present invention can be used in various applications in which bactericidal and antibacterial activities are desired.

## Claims

1. An antibacterial molded article comprising a resin molded article, wherein
the resin molded article has an antibacterial area on a surface of the resin molded article, the antibacterial area having a prominent protrusion ratio of 3% or greater and 25% or less.

2. The antibacterial molded article according to claim 1, wherein the antibacterial area has a maximum height of profile defined by JIS B 0601 (2013) of 100 nm or greater and less than 500 nm.

3. The antibacterial molded article according to claim 1 or 2, wherein the antibacterial area has a total number of protrusions of 20 or more and 100 or less per 10 µm cross-sectional length.

4. The antibacterial molded article according to any one of claims 1 to 3, wherein the resin molded article has the antibacterial area formed by atmospheric-pressure plasma treatment.

5. The antibacterial molded article according to any one of claims 1 to 4, wherein the resin molded article is a resin molded article containing at least one resin selected from the group consisting of polyolefin resins, poly(tetrafluoroethylene) (PTFE), perfluoroalkoxy alkanes (PFA), perfluoroethylene propene copolymers (FEP), poly(vinylidene fluoride) (PVDF), poly(vinylidene chloride) (PVDC), polyamide (PA), polyimide (PI), poly(phenylene sulfide) (PPS), poly(ether ether ketone) (PEEK), polyacetal (POM), acrylonitrile-butadiene-styrene copolymers (ABS), polycarbonate (PC), poly(ethylene terephthalate) (PET), polyurethane, ethylene-vinyl alcohol copolymers (EVOH), poly(vinyl chloride) (PVC), acrylic polymers, ethylene-vinyl acetate copolymers (EVA), poly(lactic acid) (PLA), polycaprolactone (PCL), and poly(glycolic acid) (PGA).

6. The antibacterial molded article according to claim 5, wherein the resin molded article is a molded article containing poly(vinylidene chloride) or polyimide.

7. The antibacterial molded article according to any one of claims 1 to 6, wherein the antibacterial molded article is a packaging, equipment for a building, a household appliance, an electronic device or peripheral device thereof, a component for automobiles, various coatings, medical equipment, an article for agriculture, stationery, or body outfit.

8. The antibacterial molded article according to any one of claims 1 to 7, wherein the antibacterial molded article is a forceps, a syringe, a stent, an artificial blood vessel, a catheter, a wound dressing, a scaffolding for regenerative therapy, an antiadhesive material, or a pacemaker.

9. A method for producing an antibacterial molded article, the method comprising:
preparing a resin molded article; and
applying atmospheric-pressure plasma treatment to a surface of the resin molded article to form an antibacterial area having a prominent protrusion ratio of 3% or greater and 25% or less on the surface.

10. An antibacterial molded article comprising a resin molded article, wherein
the resin molded article has an antibacterial area on a surface of the resin molded article, the antibacterial area having:
a maximum height of profile defined by JIS B 0601 (2013) of 100 nm or greater and less than 500 nm, and
a plurality of capture protrusions having a height of not less than half the maximum height of profile (Rz),
an average distance between the plurality of capture protrusions being 1.5 µm or greater and 7 µm or less.

11. A method for producing an antibacterial molded article, the method comprising:
preparing a molded article; and
applying atmospheric-pressure plasma treatment to a surface of the resin molded article to form an antibacterial area on a surface of the resin molded article, the antibacterial area having:
a maximum height of profile defined by JIS B 0601 (2013) of 100 nm or greater and less than 500 nm, and
a plurality of capture protrusions having a height of not less than half the maximum height of profile (Rz),
an average distance between the plurality of capture protrusions being 1.5 µm or greater and 7 µm or less.
